(19) Europäisches Patentamt

European Patent Office

Office européen des brevets

(11) **EP 1 233 157 B1**

(12) **FASCICULE DE BREVET EUROPEEN**

(45) Date de publication et mention
de la délivrance du brevet:
**07.06.2006 Bulletin 2006/23**

(51) Int Cl.:
***F01P 7/16*** *(2006.01)*

(21) Numéro de dépôt: **01400364.4**

(22) Date de dépôt: **12.02.2001**

(54) **Procédé et dispositif de refroidissement d'un moteur de véhicule automobile**

Verfahren und Einrichtung zur Kühlung einer Brennkraftmaschine eines Kraftfahrzeugs

Method and device for cooling an internal combustion engine of a motor car

(84) Etats contractants désignés:
**AT BE CH CY DE DK ES FI FR GB GR IE IT LI LU MC NL PT SE TR**

(43) Date de publication de la demande:
**21.08.2002 Bulletin 2002/34**

(73) Titulaire: **Peugeot Citroen Automobiles**
**92200 Neuilly Sur Seine (FR)**

(72) Inventeurs:
• **Tomaselli, Ludovic**
**92400 Courbevoie (FR)**

• **Le Lievre, Armel**
**78300 Montesson (FR)**

(74) Mandataire: **De Cuenca, Emmanuel Jaime**
**PSA Peugeot Citroen**
**Propriété Industrielle**
**DTAT/MPG/BPI - Service Brevets**
**18, rue des Fauvelles**
**92250 La Garenne Colombes (FR)**

(56) Documents cités:
**DE-A- 4 033 261       US-A- 4 930 455**
**US-A- 5 215 044**

**Description**

L'invention se rapporte à un procédé et à un dispositif de refroidissement d'un moteur de véhicule automobile.

L'invention concerne plus particulièrement un dispositif de refroidissement comportant un circuit hydraulique de fluide caloporteur de refroidissement, associé à une pompe de circulation de celui-ci à travers le moteur du véhicule et différentes branches du circuit. Des équipements thermiques du véhicule peuvent être disposés dans les différentes branches du circuit.

Les systèmes de refroidissement sont conçus pour garantir la tenue des moteurs aux contraintes thermomécaniques issues de la combustion. Par ailleurs, des fonctions complémentaires sont mises en oeuvre en plus du refroidissement principal du moteur, pour améliorer le rendement global ou offrir et garantir des prestations aux utilisateurs de véhicules, telles que, par exemple, le chauffage de l'habitacle.

Les systèmes de refroidissement sont dimensionnés à partir des seuls points de fonctionnement à régime maximal et à pleine charge du moteur et sont donc surdimensionnés dans la majorité des cas d'utilisation des véhicules.

Ainsi, les paramètres de fonctionnement du moteur ne sont pas optimisés, ce qui entraîne une dégradation des performances de ce dernier, tel qu'une consommation accrue, un niveau élevé d'émission de polluants ainsi qu'une réduction du confort thermique et acoustique du véhicule.

Le document DE4033261 décrit un système de refroidissement de moteur à combustion comportant un circuit de liquide caloporteur formant une boucle vers un radiateur. Le circuit comporte par ailleurs une dérivation parallèle au radiateur, la répartition du liquide de refroidissement entre le radiateur et la dérivation étant assurée par une soupape thermostatique. Un obturateur supplémentaire permet de bloquer le retour du fluide vers le moteur pour accélérer la vitesse de montée en température de ce dernier.

Cependant, ce système de refroidissement n'optimise pas les échanges thermiques avec le moteur.

Un but de la présente invention est de proposer un procédé de refroidissement d'un moteur de véhicule automobile, palliant tout ou partie des inconvénients de l'art antérieur relevés ci-dessus.

Ce but est atteint par le fait que le procédé de refroidissement d'un moteur de véhicule automobile, consiste à réguler le volume et le débit d'un fluide caloporteur de refroidissement dans un circuit hydraulique pourvu de différentes branches dans lesquelles sont disposés des équipements thermiques du véhicule, et comporte une étape de détermination de la température du liquide de refroidissement, ainsi qu'une étape de limitation ou l'arrêt de la circulation du fluide dans au moins certaines des branches lorsque la température du fluide est inférieure à une première température seuil déterminée, le procédé comporte par ailleurs une étape de détermination de la puissance moyenne instantanée fournie par le moteur, suivie d'une étape de détermination de la première température seuil en fonction de la puissance moyenne instantanée et d'une modélisation déterminée du fonctionnement du moteur définissant son état froid (première température seuil) en fonction puissance moyenne.

Un autre but de la présente invention est de proposer un dispositif de refroidissement d'un moteur de véhicule automobile, palliant tout ou partie des inconvénients de l'art antérieur relevés ci-dessus.

Ce but est atteint par le fait que le dispositif de refroidissement d'un moteur de véhicule automobile, du type comportant un circuit hydraulique de fluide caloporteur de refroidissement, associé à une pompe de circulation de celui-ci à travers le moteur du véhicule et différentes branches du circuit, dans lesquelles sont disposés des équipements thermiques du véhicule, au moins certaines des branches du circuit étant munies d'actionneurs pilotés électroniquement de régulation de la circulation du fluide dans celles-ci, le dispositif comportant des moyens d'acquisition d'informations relatives aux conditions de fonctionnement du véhicule, raccordés à des moyens de pilotage du fonctionnement des actionneurs, pour réguler le volume et le débit de fluide en circulation dans le circuit hydraulique afin d'optimiser le fonctionnement du moteur, les moyens d'acquisition d'informations étant aptes à déterminer la température du liquide de refroidissement, les moyens de pilotage assurant la limitation ou l'arrêt de la circulation du fluide dans au moins certaines des branches lorsque la température du fluide est inférieure à une première température seuil déterminée, les moyens de pilotage coopérant avec les moyens d'acquisition, pour calculer d'une part la puissance moyenne instantanée fournie par le moteur puis, d'autre part, la première température seuil en fonction de la puissance moyenne instantanée et d'une modélisation déterminée du fonctionnement du moteur définissant son état froid (première température seuil) en fonction puissance moyenne,

Par ailleurs, l'invention peut comporter l'une ou plusieurs des caractéristiques suivantes :

- les moyens de pilotage assurent au moins temporairement la circulation du fluide dans au moins certaines des branches lorsque la température du fluide est supérieure à une seconde température seuil déterminée,

- lorsque la température du fluide est comprise entre les première et seconde température seuil, les moyens de pilotage assurent au moins temporairement la circulation du fluide dans au moins certaines des branches, le volume et/ou le débit de fluide circulant dans lesdites branches étant fonction de la température du liquide,

- la seconde température seuil est comprise entre 60 et 100 degrés environ,

- la première température seuil est comprise entre 20 et 60 degrés environ et définit la température de fluide en dessous de laquelle l'état du moteur est dit "en régime transitoire" ou "froid",

- les moyens d'acquisition d'informations sont aptes à détecter une éventuelle défaillance des actionneurs pilotés électroniquement, de façon que, lorsqu'au moins une défaillance d'un actionneur est détectée et quelle que soit la température du fluide, les moyens de pilotage assurent la circulation libre du fluide dans au moins certaines des branches,

- la pompe de circulation du fluide de refroidissement est une pompe mécanique,

- le dispositif comporte une branche munie d'un actionneur piloté électroniquement et dans laquelle est situé des moyens formant recirculation d'au moins une partie des gaz d'échappement du moteur à l'admission, ou "Exaust Gaz Recycling (EGR)", l'actionneur de la branche de refroidissement associée aux moyens de recirculation des gaz d'échappement étant fermé lorsque la température du fluide est inférieure à la première température seuil,

- le dispositif comporte une branche comportant des moyens formant aérotherme d'habitacle et éventuellement de moyens de chauffage supplémentaires,

- le dispositif comporte des moyens formant aérotherme d'habitacle et éventuellement de moyens de chauffage supplémentaires situés dans la branche comportant les moyens de recirculation des gaz d'échappement du moteur,

- la branche comportant les moyens aérotherme est munie d'un actionneur piloté électroniquement, les moyens aérotherme étant aptes à assurer un chauffage de l'habitacle à une première température consigne déterminée par l'utilisateur du véhicule, et en ce que les moyens de pilotage coopèrent avec les moyens d'acquisition, pour d'une part déterminer la température extérieure au véhicule, et, d'autre part, ouvrir, respectivement fermer, l'actionneur de la branche aérotherme lorsque la température extérieure est inférieure, respectivement supérieure, à la première température consigne,

- la branche comportant les moyens aérotherme est munie d'un actionneur piloté électroniquement, les moyens aérotherme étant aptes à assurer une climatisation de l'habitacle à une seconde température consigne déterminée par l'utilisateur du véhicule, et en ce que les moyens de pilotage coopèrent avec les moyens d'acquisition, pour d'une part déterminer la température extérieure au véhicule, et, d'autre part, fermer, respectivement ouvrir, l'actionneur de la branche aérotherme lorsque la température extérieure est inférieure, respectivement supérieure, à la seconde température consigne.

D'autres particularités et avantages apparaîtront à la lecture de la description ci-après, faite en référence aux figures dans lesquelles :

- la figure 1 représente schématiquement la structure et le fonctionnement d'un premier exemple de réalisation du dispositif de refroidissement selon l'invention,

- la figure 2 représente un second mode de réalisation du dispositif de refroidissement selon l'invention,

- la figure 3 représente, sur un même graphique, un exemple de variation au court du temps t de la température T du liquide de refroidissement et d'une première température seuil $T_1$,

- la figure 4 représente un exemple de variation de la température Th de l'huile de lubrification du moteur en fonction du temps t, ainsi que le signal représentant les états d'ouverture O et de fermeture F de l'actionneur piloté électroniquement de la première branche du circuit,

- la figure 5 représente les états d'ouverture O et de fermeture F de l'actionneur de la branche de dégazage en fonction de la température T du liquide de refroidissement,

- la figure 6 représente un exemple de variation de la période P du signal de commande de l'actionneur de la branche de dégazage en fonction de la température T du liquide de refroidissement,

- la figure 7 représente l'état d'ouverture de la vanne de by-pass en fonction de la température T du liquide de refroidissement,

- la figure 8 représente schématiquement un exemple de couplage de l'ouverture de la vanne de by-pass en fonction de l'ouverture de la vanne d'un radiateur,

- la figure 9 représente deux exemples de variation de la vitesse de rotation d'un groupe moto ventilateur, en fonction de la variation de la température T du liquide de refroidissement,

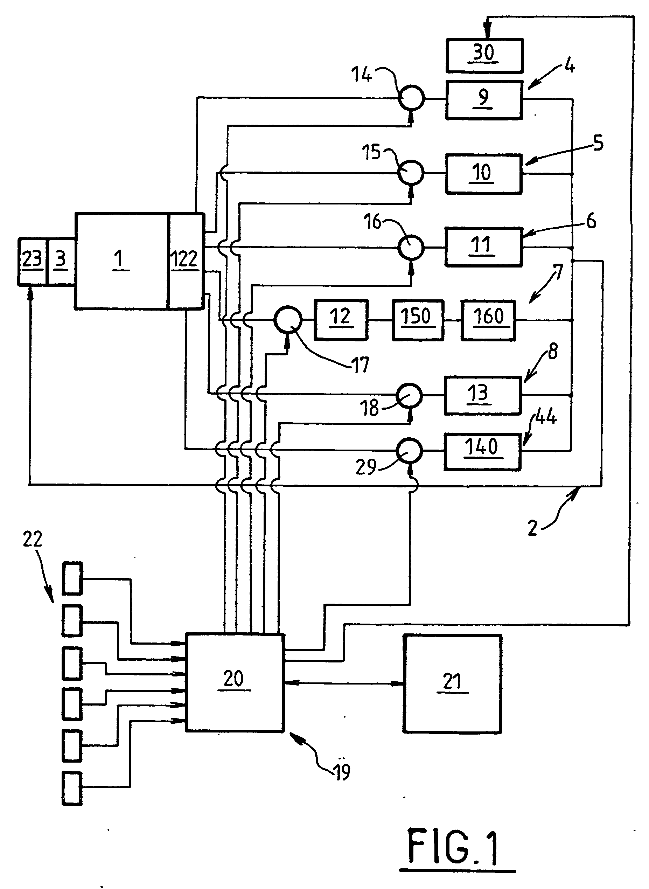

La figure 1 représente un exemple de réalisation préféré d'un dispositif de refroidissement selon l'invention. Le dispositif de refroidissement comporte un circuit hydraulique 2 contenant un fluide caloporteur de refroidissement.

Une pompe 3 hydraulique est associée au circuit 2, pour assurer la circulation du fluide à travers le moteur 1 et différentes branches 4, 5, 6, 7, 8, 44 du circuit 2. De préférence, la pompe 3 est une pompe de type mécanique, cependant, l'emploi d'une pompe électrique peut également être envisagé.

Les branches 4, 5, 6, 7, 8, 44 du circuit 2 sont alimentées en liquide de refroidissement à partir d'un boîtier 122, ou "Boîtier de Sortie d'Eau" (BSE). Le boîtier 122, qui est fixé au moteur 1, et de préférence à la culasse du moteur 1, assure la collecte du liquide de refroidissement ayant circulé dans le moteur 1. Le liquide de refroidissement ayant circulé dans les branches est récupéré quant à lui par un collecteur d'entrée d'eau 23 avant sa recirculation dans le moteur 1.

Avantageusement, au moins certaines des branches 4, 5, 6, 7, 8, 44 du circuit 2 sont munies d'actionneurs pilotés électroniquement respectifs 14, 15, 16, 17, 18, 29 de régulation de la circulation du fluide dans celles-ci. Les actionneurs pilotés électroniquement sont, par exemple, des électrovannes. Par ailleurs, le dispositif comporte des moyens 22 d'acquisition d'informations relatives aux conditions de fonctionnement du véhicule. Les moyens 22 d'acquisition sont raccordés à des moyens 19 de pilotage du fonctionnement d'au moins une partie des actionneurs 14, 15, 16, 17, 18, 29, pour réguler le volume et le débit de fluide en circulation dans le circuit hydraulique 2 afin d'optimiser le fonctionnement du moteur.

Les moyens de pilotage 19 ou unité de traitement d'information peuvent comporter tout calculateur 20 approprié, tel que, par exemple, un "Boîtier de Servitude Intelligent" (BSI) de type connu. Le calculateur 20 est associé à des moyens de stockage d'information 21 comportant, par exemple, une mémoire programmable et/ou une mémoire à lecture seule. Le calculateur 20 est également relié à des moyens 22 d'acquisition d'informations relatives aux conditions de fonctionnement du véhicule, comportant, par exemple, divers capteurs ou d'autres calculateurs tel qu'un calculateur de pilotage du moteur.

De préférence, les moyens 22 d'acquisition d'informations sont aptes à déterminer au moins l'un des paramètres suivants : le régime du moteur, le couple du moteur, la vitesse du véhicule, la température de l'huile de lubrification du moteur, la température du liquide de refroidissement du moteur, la température des gaz d'échappement du moteur, la température de l'air extérieur au véhicule et la température à l'intérieur de l'habitacle. Les différentes informations relatives aux conditions de fonctionnement du véhicule sont traitées et analysées par le calculateur 20, pour piloter le fonctionnement des actionneurs 14, 15, 16, 17, 18, 29 et éventuellement celui de la pompe 3.

Selon l'invention, le débit ou volume de liquide de refroidissement admis ou non à circuler dans les différentes branches 4, 5, 6, 7, 8, 44 du circuit 2 est fonction de l'état d'échauffement du moteur 1. Par exemple, il est possible de définir trois états du moteur 1, un premier état dans lequel le moteur est dit "froid", un second dans lequel le moteur 1 est dit "chaud", et un troisième état dit "intermédiaire" entre les états chaud et froid.

De préférence, l'état thermique du moteur 1 est caractérisé en fonction de la température T du liquide de refroidissement, de préférence à la sortie du moteur 1. Ainsi, lorsque la température du liquide de refroidissement est inférieure à une première température seuil $T_1$ déterminée, l'état du moteur 1 est dit froid. De même, lorsque la température T du liquide de refroidissement est supérieure à une seconde température seuil $T_2$ déterminée, l'état du moteur 1 est dit chaud. Enfin, lorsque la température du liquide de refroidissement est comprise entre les première $T_1$ et seconde $T_2$ températures seuil, l'état du moteur 1 est dit intermédiaire.

La première $T_1$ et/ou la seconde $T_2$ température seuil peuvent être des valeurs fixes ou variables déterminées en fonction du type du moteur 1. De préférence, la première $T_1$ et/ou la seconde $T_2$ température seuil sont des variables en fonction du type du moteur 1 et d'au moins un paramètre de fonctionnement du moteur 1. Par exemple, les première $T_1$ et/ou seconde $T_2$ températures seuil sont des fonctions de la puissance moyenne Pm fournie par le moteur 1. C'est-à-dire que les moyens de pilotage 19 coopèrent avec les moyens 22 d'acquisition, pour calculer la puissance moyenne instantanée Pm fournie par le moteur 1.

Les moyens de pilotage 19 calculent ensuite la première $T_1$ et/ou la seconde $T_2$ température seuil, en fonction de la puissance moyenne Pm instantanée et d'une modélisation déterminée du fonctionnement du moteur 1. La modélisation du moteur définit les états froid, chaud et intermédiaire (première $T_1$ et seconde $T_2$ températures seuil) en fonction de la puissance moyenne Pm fournie par ce dernier.

La puissance instantanée P(t) en kiloWatt (kW) fournie par le moteur à l'instant t est donnée par la relation suivante : $P(t) = \dfrac{2.\pi.\text{N.C}}{60 \times 1000}$ ; dans laquelle N est le régime instantané du moteur en tour/min, et C le couple instantané du moteur en N.m. Les valeurs du régime N et du couple C peuvent être mesurées par les moyens 22 d'acquisition de données, c'est-à-dire par des capteurs appropriés. Classiquement, le régime N du moteur est compris entre 0 et 6000 tr/min. environ, tandis que le couple C est compris entre 0 et 350 N.m. environ.

Les moyens de pilotage 19 calculent ensuite la puissance P(t) fournie par le moteur à l'instant t et la puissance moyenne Pm(t) fournie par le moteur à l'instant t. La puissance moyenne Pm(t) à l'instant t peut être calculée par la relation suivante :

$$Pm(t) = \frac{(t-1) \times Pm(t-1) + Pm(t)}{t},$$

dans laquelle Pm(t-1) est la puissance moyenne à l'instant (t-1). Bien entendu, la puissance moyenne peut être calculée par tout autre formule équivalente, telle que :

$$Pm(t) = \frac{c.Pm(t-1) + kP(t)}{c+k}, \text{ dans laquelle}$$

Pm(t-1) est la puissance moyenne à l'instant (t-1), P(t) la puissance instantanée à l'instant t, et c et k des coefficients pondérateurs.

Le calculateur 19 et/ou les moyens 21 de stockage d'information 21 peuvent contenir la modélisation du fonctionnement du moteur 1, définissant son état froid, chaud et intermédiaire (première $T_1$ et seconde températures seuil $T_2$) en fonction puissance moyenne Pm. C'est-à-dire que pour un type de moteur donné, on établit empiriquement et/ou par calcul des tables de correspondance donnant les températures seuil $T_1$ et $T_2$ en fonction de la puissance moyenne Pm du moteur 1. Ces tables ou modélisations, qui sont fonction du type de moteur, sont par exemple des fonctions polynomiales. La première température seuil $T_1$ est ainsi, en général, une fonction décroissante de la puissance moyenne.

La première température seuil $T_1$ peut varier entre 20 et 60 degrés environ, et de préférence entre 30 et 50 degrés. La seconde température seuil $T_2$ peut varier quant à elle entre 60 et 100 degrés environ. Cependant, la seconde température seuil $T_2$ est en général sensiblement constante autour de la valeur de 80 degrés.

Ainsi, les moyens de pilotage 19 coopèrent avec les moyens 22 d'acquisition de données, pour comparer la température T du liquide de refroidissement avec les deux températures seuil $T_1$ et $T_2$.

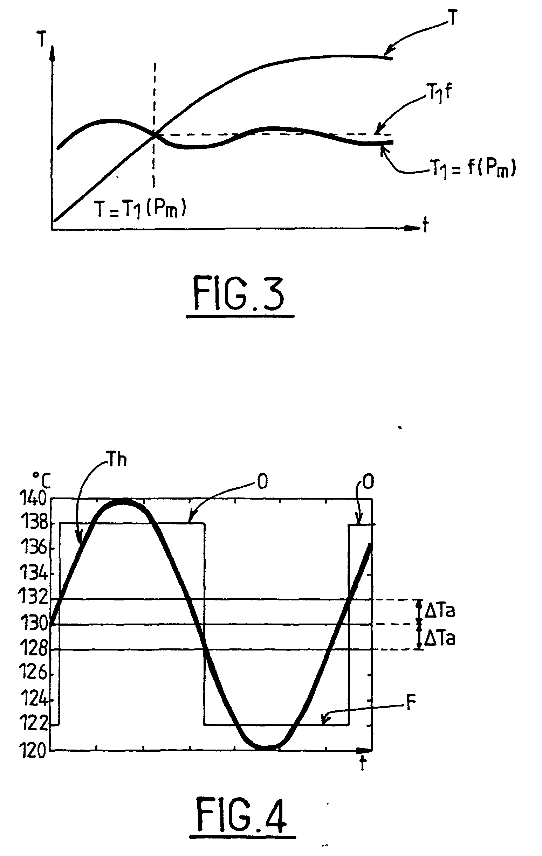

Par soucis de simplification, la valeur de la première température seuil $T_1$ peut être figée par les moyens 19 de pilotage dès que la température T mesurée du liquide de refroidissement atteint la première température seuil $T_1$. En effet, la figure 3 illustre, sur un même graphique, un exemple de variation au court du temps t : de la température T du liquide de refroidissement, et de la première température seuil $T_1$(Pm) qui est fonction de la puissance moyenne. En déterminant ces températures T et $T_1$(Pm), on constate que, pour une puissance moyenne donnée, à partir du moment où la température T du fluide atteint la première valeur seuil T1, cette première température seuil $T_1$ varie peu autour d'une constante $T_1$f.

En se référant à présent à la figure 1, le circuit 2 comporte une première branche 8 munie d'un premier actionneur piloté électroniquement 18 et dans laquelle est disposé un échangeur eau/huile 13. De préférence, le premier actionneur 18 est du type "tout ou rien". Les moyens 19 de pilotage coopèrent avec les moyens 22 d'acquisition, pour commander l'ouverture ou la fermeture du premier actionneur 18, de façon à d'une part accélérer la vitesse de montée en température de l'huile et, d'autre part, réguler la température de l'huile autour d'une température de référence Tr déterminée.

Plus précisément, lorsque la température T du fluide de refroidissement déterminée par les moyens 22 d'acquisition est inférieure à la première température seuil $T_1$, les moyens de pilotage 19 limitent, et de préférence arrêtent, la circulation du fluide dans la première branche 8.

Par ailleurs, lorsque la température T du liquide de refroidissement est supérieure à la seconde température seuil $T_2$, les moyens de pilotage 19 régulent la température de l'huile autour de la température de référence Tr. La température de référence Tr de l'huile correspond à la température de fonctionnement optimal de l'huile. La température de référence Tr, qui dépend du type d'huile, est comprise classiquement entre 120 et 140 degrés environ, et est égale de préférence à 130 degrés environ. Pour ce faire, les moyens 22 d'acquisition comportent des moyens de mesure de la température de l'huile de lubrification, tel qu'un capteur approprié.

La figure 4 illustre un exemple de variation de la température de l'huile Th en fonction du temps t. Sur le même graphique est représenté un signal carré symbolisant les états d'ouverture O et de fermeture F de l'actionneur 18 de la première branche 8. Les crans supérieurs du signal carré représentent les moments d'ouverture O de l'actionneur 18. Les crans inférieurs du signal carré représentent les moments de fermeture F de ce même actionneur 18.

Ainsi, lorsque la température Th de l'huile excède la température de référence Tr d'une valeur déterminée ΔTa les moyens de pilotage 19 assurent l'ouverture de l'actionneur 18 et donc la circulation du fluide dans la première branche 8. Par ailleurs, lorsque la température Th de l'huile est inférieure d'une valeur ΔTa à la température de référence Tr, les moyens de pilotage 19 ferment l'actionneur 18 et donc arrêtent la circulation du fluide dans la première branche 8. Les différentiels de température ΔTa qui déclenchent les ouvertures O et fermetures F du premier actionneur 18 sont de l'ordre, par exemple, de un à six degrés environ. Comme représenté à la figure 4, les différentiels de température ΔTa sont égaux de préférence à deux degrés.

De cette façon, compte tenu de l'inertie thermique du système, la température Th de l'huile peut être maintenue autour de la température de référence Tr avec une tolérance de cinq degrés environ. Bien entendu, la température Th de l'huile peut être maintenue dans un intervalle plus grand ou plus petit. Pour cela, il suffit de changer les différentiels ou seuils ΔTa d'ouverture et de fermeture du premier actionneur 18 autour de la température de référence Tr.

Avantageusement, lorsque la température T du liquide de refroidissement est comprise entre les première $T_1$ et seconde $T_2$ température seuil, les moyens de pilotage 19 peuvent n'ouvrir le premier actionneur 18 que lorsque la température du liquide excède la température de l'huile d'une seconde valeur ΔTb déterminée. Cette seconde valeur ΔTb peut être comprise, par exemple, entre 10 et 20 degrés environ et est égale de préférence à 15 degrés. De cette façon, le liquide de refroidissement contribue à accélérer la montée en température de l'huile.

En se référant à nouveau à la figure 1, le circuit 2 comporte une seconde branche 6 dite "de dégazage", munie d'un actionneur piloté électroniquement 16 et dans laquelle est disposée une boîte de dégazage 11.

Les moyens de pilotage 19 régulent la circulation du fluide de refroidissement de façon que la quantité de fluide circulant dans la seconde branche 6 est plus importante lorsque la température T du fluide de refroidissement est supérieure à la première température seuil $T_1$, que lorsque la température T du fluide est inférieure à cette première température seuil $T_1$.

Par ailleurs, les moyens de pilotage 19 régulent la circulation de fluide dans la branche 6 de dégazage pour que la quantité de fluide circulant dans celle-ci soit plus importante lorsque la température T du fluide est supérieure à la seconde température seuil $T_2$, que lorsque la température T du fluide est inférieure à cette seconde température seuil $T_2$.

De plus, lorsque la température T du fluide est comprise entre les première $T_1$ et seconde $T_2$ températures seuil, les moyens de pilotage 19 peuvent réguler la circulation de fluide dans la branche 6 de dégazage en fonction de la température T du liquide de refroidissement. Plus précisément, les moyens de pilotage 19 peuvent commander l'augmentation de la quantité de liquide de refroidissement circulant dans la branche 6 de dégazage lorsque la température T de ce liquide augmente. L'actionneur 16 de la branche 6 de dégazage est, de préférence, du type à "tout ou rien", c'est à dire à ouverture et fermeture totales.

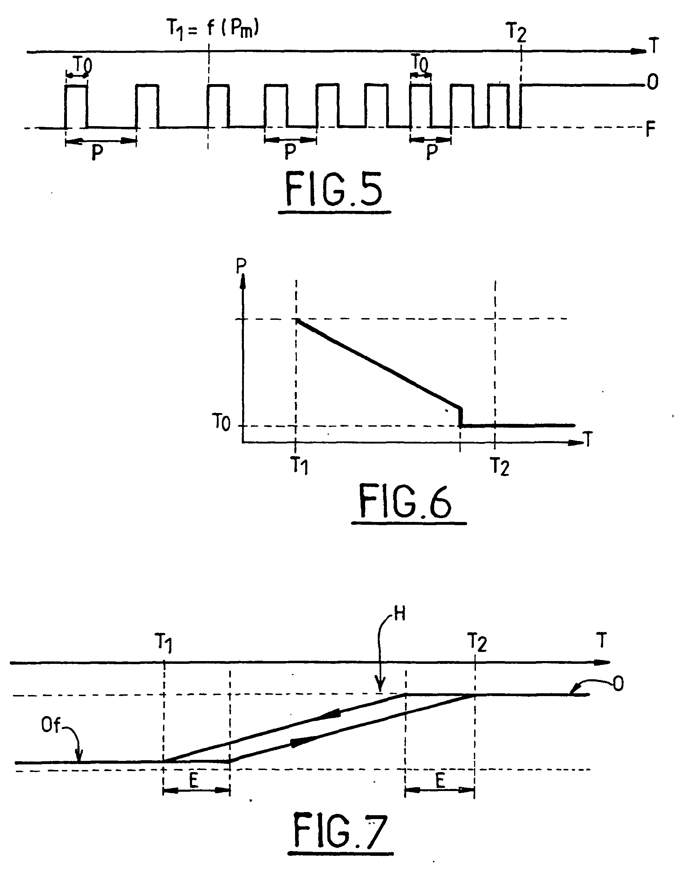

Comme représenté à la figure 5, lorsque la température T du fluide est supérieure à la seconde température seuil $T_2$, les moyens 19 de pilotage commandent l'ouverture, de préférence totale, du second actionneur 16.

Par ailleurs, lorsque la température du liquide de refroidissement T est inférieure à la première température seuil $T_1$, les moyens 19 de pilotage peuvent commander l'ouverture du second actionneur 16 en fonction de la puissance moyenne Pm fournie par le moteur 1. Plus précisément, les moyens de pilotage 19 augmentent la quantité de liquide admise à circuler dans la branche 6 de dégazage lorsque la puissance moyenne Pm fournie par le moteur 1 augmente. L'actionneur 16 de la branche 6 est commandée, par exemple, par un signal carré variable en fonction de la puissance moyenne Pm fournie par le moteur 1. La partie haute du signal représente les ouvertures O de l'actionneur 16, tandis que la partie basse représente les fermetures F de l'actionneur 16.

Lorsque le moteur est dans son état froid ($T<T_1$), le signal carré de commande de l'actionneur 16 peut être périodique. En particulier, le temps d'ouverture To de l'actionneur 16 peut être constant, tandis que la période P du signal peut varier en fonction de la puissance moyenne Pm. C'est à dire que les temps de fermeture de la vanne 16 peuvent diminuer, par exemple linéairement, lorsque la puissance moyenne Pm du moteur augmente.

Lorsque le moteur 1 est dans son état intermédiaire (température du fluide T comprise entre les première $T_1$ et seconde $T_2$ températures seuil), les moyens 19 de pilotage commandant l'ouverture de l'actionneur 16 selon un signal carré variable en fonction de la température T du liquide de refroidissement. En particulier, le temps d'ouverture To de l'actionneur 16 peut être constant, tandis que la période P du signal peut diminuer lorsque la température T du liquide de refroidissement augmente.

Comme représenté à la figure 6, entre $T_1$ et $T_2$, la période P du signal carré peut être inversement proportionnelle à la température T du liquide. De plus, lorsque la température T du liquide s'approche de la seconde température seuil $T_2$, la droite représentative de l'évolution de la période P peut présenter une discontinuité, de façon que la période P reste constante et égale au temps d'ouverture To. C'est-à-dire que, lorsque la température T du liquide atteint, par exemple, la seconde température seuil $T_2$ moins cinq degrés environ, la droite décroissante représentant la période P est suivie d'une portion constante horizontale.

Le temps d'ouverture To de l'actionneur 16 peut être de l'ordre de quelques secondes et par exemple cinq secondes. La période du signal de commande de l'actionneur 16 peut quant à elle varier, par exemple, entre 5 et 50 secondes.

Bien entendu, tout autre type de signal approprié peut être utilisé pour commander le second actionneur 16. Par exemple, comme précédemment, il est possible de faire varier le temps d'ouverture To de la vanne, en plus ou à la place du temps de fermeture.

Comme illustré à la figure 1, le circuit 2 comporte une troisième branche 5 munie d'un actionneur piloté électroniquement 15 et associée à des moyens 10 formant retour direct de fluide ou by-pass. Les moyens 19 de pilotage peuvent réguler la circulation du fluide de refroidissement dans la branche 5 de by-pass en fonction de la température T de ce fluide. En particulier, la quantité de fluide admise à circuler dans la branche 5 by-pass augmente lorsque la température du fluide croît de la première $T_1$ vers la seconde température seuil $T_2$. De préférence, l'actionneur piloté électroniquement 15 de la branche 5 by-pass est du type proportionnel.

Comme représenté à la figure 7, lorsque la température du fluide T est inférieure à la première température seuil $T_1$, les moyens de pilotage 19 peuvent limiter à un débit de fuite déterminé la circulation de fluide dans la branche 5 by-pass. C'est à dire que l'actionneur 15 de la branche 5 by-pass est partiellement ouvert Of. Par exemple, l'ouverture partielle Of de l'actionneur 15 peut assurer un débit de fuite dans la branche 5 by-pass compris entre $1/50^{ème}$ à $1/5^{ème}$ environ du débit maximal de la branche 5.

Lorsque la température du fluide est supérieure à la seconde température seuil $T_2$, les moyens de pilotage 19 commandent au moins temporairement l'ouverture totale O de l'actionneur 15 de by-pass (figure 7). Par ailleurs, lorsque la température du fluide est comprise entre les première $T_1$ et seconde températures seuil $T_2$, le degré d'ouverture de l'actionneur 15 peut être au moins temporairement proportionnel à la température T du fluide de refroidissement. Plus précisément, entre $T_1$ et $T_2$, l'ouverture de l'actionneur 15 de by-pass croît lorsque la température T du fluide croît et, diminue lorsque la température T du fluide diminue. La variation de l'ouverture de l'actionneur 15 peut être proportionnelle à la température du fluide T.

Avantageusement, la courbe représentative de l'ouverture de l'actionneur 15 en fonction de la température T du fluide peut présenter une hystérésis H. C'est-à-dire que, l'augmentation de l'ouverture de l'actionneur 15 commence après que la température du liquide T excède la première température de référence $T_1$ d'une première valeur E déterminée. De même, la diminution de l'ouverture de l'actionneur 15 commence après que la température T du liquide devient inférieure, d'une première valeur E déterminée, à la seconde température de référence $T_2$. C'est-à-dire que les ouvertures et fermetures de l'actionneur 15 sont réalisées de façon décalée par rapport respectivement aux seuils de températures $T_1$ et $T_2$. Les valeurs E de ces décalages sont par, exemple, de l'ordre de 5 degrés.

En se référant à nouveau à la figure 1, le circuit comprend une quatrième branche 4 munie d'un actionneur piloté électroniquement 14 et pourvue de moyens 9 formant radiateur. Les moyens 9 radiateur peuvent être couplés à un groupe moto ventilateur 30, qui peut lui aussi être commandé par les moyens de pilotage 19. L'actionneur 14 de la quatrième branche 4 est du type proportionnel.

Avantageusement, lorsque la température T du fluide est supérieure à la seconde température seuil $T_2$, les moyens de pilotage 19 peuvent commander l'actionneur 15 de la branche 5 by-pass en fonction de l'ouverture et la fermeture de l'actionneur 14 de la branche 4 radiateur.

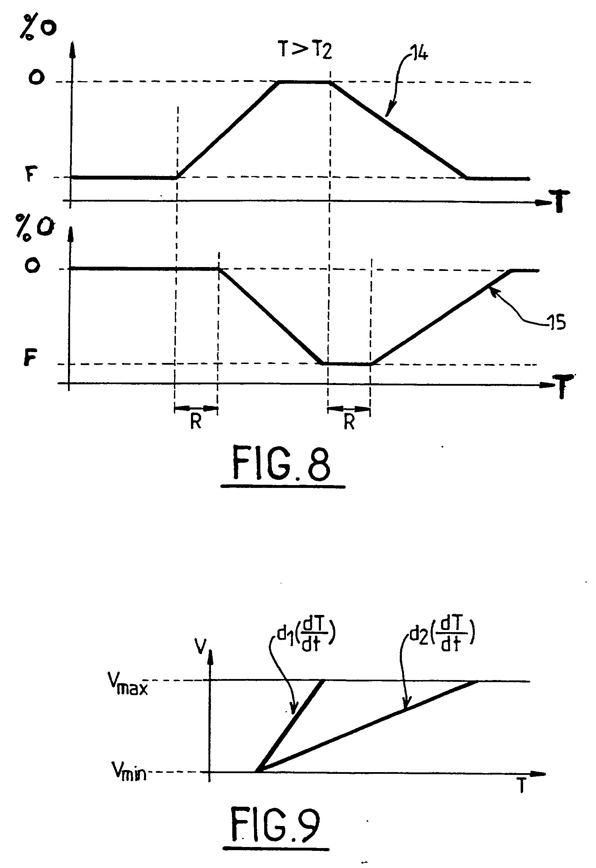

La figure 8 illustre le pourcentage d'ouverture %O des actionneurs 15, 14 des troisième et quatrième branches 5, 4 en fonction de la température T du liquide de refroidissement. Comme représenté à la figure 8, les moyens de pilotage 19 peuvent fermer F l'actionneur 15 de la branche 5 by-pass lorsque l'actionneur 14 de la branche 4 radiateur est ouvert O. De même, l'actionneur 15 de la branche 5 by-pass est ouvert O lorsque l'actionneur 14 de la branche 4 radiateur est fermé F. De préférence, l'ouverture de l'actionneur 15 de la branche 5 by-pass est inversement proportionnelle à l'ouverture de l'actionneur 14 de la branche 4 radiateur.

Par ailleurs, les fermetures et ouvertures de l'actionneur 15 de la branche 5 by-pass peuvent être réalisées avec un décalage de température R déterminé par rapport aux ouvertures et fermetures de l'actionneur 14 de la branche 4 radiateur. Le décalage de température R peut être de l'ordre de quelques degrés, par exemple cinq degrés.

Comme représenté à la figure 9, les moyens de pilotage 19 peuvent commander les moyens 30 de ventilation en fonction de la température du liquide de refroidissement. Plus précisément, la vitesse de rotation des moyens 30 de ventilation peut augmenter lorsque la température T du liquide de refroidissement croît.

De préférence, la vitesse V de rotation des moyens 30 de ventilation augmente proportionnellement à la vitesse de variation de la température du liquide de refroidissement $\dfrac{dT}{dt}$. La figure 9 illustre deux exemples de droites d1 et d2 représentant la vitesse de rotation du groupe moto ventilateur en fonction de la température T du liquide. Les deux droites d1 et d2 ont des pentes différentes représentatives chacune d'une vitesse de variation $\dfrac{dT}{dt}$ de la température T du liquide de refroidissement. La vitesse de variation $\dfrac{dT}{dt}$ de la température T du liquide de refroidissement peut être calculée par les moyens 19 de pilotage.

Le circuit 2 de refroidissement représenté à la figure 1 comporte également une cinquième branche 7 munie d'un actionneur piloté électroniquement 17 et dans laquelle sont disposés des moyens 12 formant aérotherme d'habitacle. Classiquement, les moyens aérotherme 17 peuvent être conformés pour assurer un chauffage de l'habitacle à une première température consigne Tc déterminée par l'utilisateur du véhicule.

Les moyens de pilotage 20 coopèrent avec les moyens 22 d'acquisition, pour déterminer la température Te extérieure au véhicule. Lorsque la température extérieure Te est inférieure à la première température consigne Tc, les moyens de pilotage 20 peuvent ouvrir l'actionneur de la branche 7 aérotherme. De la même façon, lorsque la température extérieure Te est supérieure à la première température consigne Tc, les moyens de pilotage 20 peuvent fermer l'actionneur de la branche 7 aérotherme.

De la même façon, les moyens 12 aérotherme peuvent comporter une fonction climatisation de l'habitacle à une seconde température consigne Tr. Ainsi, lorsque la température extérieure Te est inférieure à la seconde température consigne Tr, les moyens de pilotage 20 peuvent ouvrir l'actionneur de la branche 7 aérotherme. De même, lorsque la température extérieure Te est supérieure à la seconde température consigne Tr, les moyens de pilotage 20 peuvent fermer l'actionneur de la branche 7 aérotherme.

Cette cinquième branche 7 peut comporter également éventuellement de moyens 160 de chauffage supplémentaires et/ou des moyens 150 de recirculation des gaz d'échappement du moteur 1 à l'admission. Classiquement, les moyens 150 formant recirculation d'au moins une partie des gaz d'échappement du moteur 1 à l'admission ou "Exaust Gaz Recycling (EGR)", permettent de contrôler la température des gaz de combustion du moteur pour, par exemple, un traitement anti-pollution.

Enfin, le circuit 2 représenté à la figure 1 comprend une sixième branche 44 dans laquelle est situé des moyens 140 formant réchauffage de l'air d'admission du moteur 1. Cette sixième branche 44 est également munie d'un actionneur piloté électroniquement 29 commandée par les moyens 19 de pilotage.

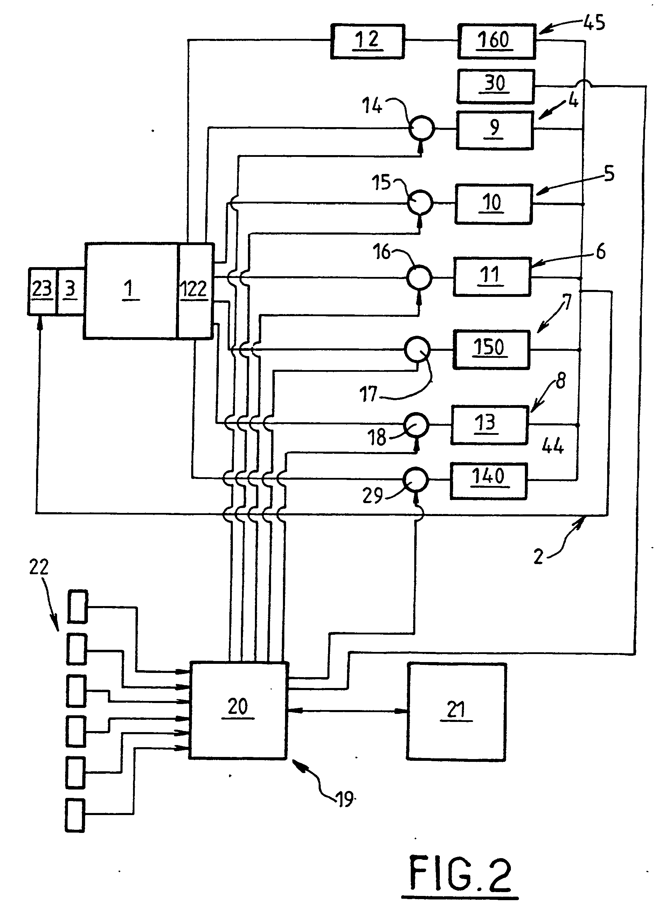

La figure 2 illustre une variante de réalisation du dispositif de refroidissement selon l'invention. Le dispositif représenté à la figure 2 diffère de celui de la figure 1 en ce que les moyens aérotherme 12 et les moyens 160 de chauffage sont disposés dans une septième branche 45 qui est distincte de la sixième branche 7 associée aux moyens 150 de recirculation des gaz d'échappement (EGR). Par ailleurs, la septième branche 45 est dépourvue d'actionneur piloté électroniquement.

Bien entendu, l'invention ne saurait se limiter aux exemples de réalisation des figures 1 et 2. En effet, le dispositif de refroidissement peut ne comporter qu'une partie des équipements thermiques 9, 10, 11, 12, 13, 140, 150, 16 et/ou des branches 4, 5, 6, 7, 8, 44, 45 décrits ci-dessus. De plus, une ou plusieurs des branches 4, 5, 6, 7, 8, 44, 45 peuvent être dépourvue d'actionneur piloté électroniquement.

Avantageusement, les moyens 22 d'acquisition d'informations peuvent être conformés pour détecter une éventuelle défaillance d'au moins un des actionneurs pilotés électroniquement. De cette façon, lorsqu'au moins une défaillance d'un actionneur est détectée et quelle que soit la température du fluide, les moyens de pilotage 19 peuvent assurer la circulation libre du fluide dans au moins certaines des branches, et de préférence dans toutes les branches. C'est-à-dire que, lorsqu'une défaillance du système est détectée, toutes les vannes du circuit 2 sont ouvertes.

On conçoit donc aisément que le dispositif de refroidissement selon l'invention, tout en étant de structure simple, permet de gérer en temps réel et de manière optimum les échanges de chaleur.

## Revendications

1. Procédé de refroidissement d'un moteur de véhicule automobile, consistant à réguler le volume et le débit d'un fluide caloporteur de refroidissement dans un circuit hydraulique (2) pourvu de différentes branches (4, 5, 6, 7, 8, 44, 45) dans lesquelles sont disposés des équipements thermiques (9, 10, 11, 12, 13, 140, 150, 160), comportant une étape de détermination de la température du liquide de refroidissement, et une étape de limitation ou d'arrêt de la circulation du fluide dans au moins certaines des branches lorsque la température du fluide est inférieure à une première température seuil ($T_1$) déterminée, **caractérisé en ce qu'**il comporte une étape de détermination de la puissance moyenne instantanée ($P_m$) fournie par le moteur (1), suivie d'une étape de détermination de la première température seuil ($T_1$) en fonction de la puissance moyenne ($P_m$) instantanée et d'une modélisation déterminée du fonctionnement du moteur (1) définissant son état froid, première température seuil ($T_1$), en fonction puissance moyenne ($P_m$).

2. Dispositif de refroidissement d'un moteur de véhicule automobile, du type comportant un circuit hydraulique (2) de fluide caloporteur de refroidissement, associé à une pompe (3) de circulation de celui-ci à travers le moteur (1) du véhicule et différentes branches (4, 5, 6, 7, 8, 44, 45) du circuit, dans lesquelles sont disposés des équipements thermiques (9, 10, 11, 12, 13, 140, 150, 160) du véhicule, au moins certaines des branches (4, 5, 6, 7, 8, 44) du circuit (2) étant munies d'actionneurs pilotés électroniquement (14, 15, 16, 17, 18, 29) de régulation de la circulation du fluide dans celles-ci, le dispositif comportant des moyens (22) d'acquisition d'informations relatives aux conditions de fonctionnement du véhicule, raccordés à des moyens (19) de pilotage du fonctionnement des actionneurs (14, 15, 16, 17, 18, 29), pour réguler le volume et le débit de fluide en circulation dans le circuit hydraulique (2) afin d'optimiser le fonctionnement du moteur, les moyens (22) d'acquisition d'informations étant aptes à déterminer la température du liquide de refroidissement, les moyens de pilotage (19) assurant la limitation ou l'arrêt de la circulation du fluide dans au moins certaines des branches (4, 5, 6, 7, 8, 44) lorsque la température du fluide est inférieure à une première température seuil ($T_1$) déterminée, **caractérisé en ce que** les moyens de pilotage (20) coopèrent avec les moyens (22) d'acquisition, pour calculer d'une part de la puissance moyenne instantanée ($P_m$) fournie par le moteur (1) puis, d'autre part, la première température seuil ($T_1$) en fonction de la puissance moyenne ($P_m$) instantanée et d'une modélisation déterminée du fonctionnement du moteur (1) définissant son état froid, première température seuil ($T_1$), en fonction puissance moyenne ($P_m$).

3. Dispositif selon la revendication 2 **caractérisé en ce que** les moyens de pilotage (19) assurent au moins temporairement la circulation du fluide dans au moins certaines des branches (4, 5, 6, 7, 8, 44) lorsque la température du fluide est supérieure à une

seconde température seuil ($T_2$) déterminée.

4. Dispositif selon les revendications 2 et 3 **caractérisé en ce que**, lorsque la température du fluide est comprise entre les première ($T_1$) et seconde ($T_2$) température seuil, les moyens de pilotage (19) assurent au moins temporairement la circulation du fluide dans au moins certaines (4, 5, 6, 7, 8, 44) des branches, le volume et/ou le débit de fluide circulant dans lesdites branches (4, 5, 6, 7, 8, 44) étant fonction de la température du liquide.

5. Dispositif selon la revendication 3 ou 4, **caractérisé en ce que** la seconde température seuil ($T_2$) est comprise entre 60 et 100 degrés environ.

6. Dispositif selon l'une quelconque des revendications 2 à 5, **caractérisé en ce que** la première température seuil ($T_1$) est comprise entre 20 et 60 degrés environ et définit la température de fluide en dessous de laquelle l'état du moteur (1) est dit "en régime transitoire" ou "froid".

7. Dispositif selon l'une quelconque des revendications 2 à 6, **caractérisé en ce que** les moyens (22) d'acquisition d'informations sont aptes à détecter une éventuelle défaillance des actionneurs (14, 15, 16, 17, 18, 29), de façon que, lorsqu'au moins une défaillance d'un actionneur (14, 15, 16, 17, 18, 29) est détectée et quelle que soit la température du fluide, les moyens de pilotage (19) assurent la circulation libre du fluide dans au moins certaines des branches (4, 5, 6, 7, 8, 44).

8. Dispositif selon l'une quelconque des revendications précédentes, **caractérisé en ce que** la pompe (3) de circulation du fluide de refroidissement est une pompe mécanique.

9. Dispositif selon l'une quelconque des revendications précédentes, **caractérisé en ce qu'**il comporte une branche (7) munie d'un actionneur piloté électroniquement (17) et associée à des moyens (150) formant recirculation d'au moins une partie des gaz d'échappement du moteur (1) à l'admission, ou "Exaust Gaz Recycling (EGR)", l'actionneur (17) de la branche (7) de refroidissement associée aux moyens de recirculation des gaz d'échappement étant fermé lorsque la température du fluide est inférieure à la première température seuil ($T_1$).

10. Dispositif selon l'une quelconque des revendications précédentes, **caractérisé en ce qu'**il comporte une branche (7, 45) comportant des moyens (12) formant aérotherme d'habitacle et éventuellement de moyens (160) de chauffage supplémentaires.

11. Dispositif selon la revendication 10, **caractérisé en ce qu'**il comporte des moyens (12) formant aérotherme d'habitacle et éventuellement de moyens (160) de chauffage supplémentaires situés dans la branche (7) comportant les moyens (150) de recirculation des gaz d'échappement du moteur (1).

12. Dispositif selon la revendication 9, **caractérisé en ce que** la branche (7, 45) comportant les moyens (12) aérotherme est munie d'un actionneur piloté électroniquement, les moyens aérotherme étant aptes à assurer un chauffage de l'habitacle à une première température consigne (Tc) déterminée par l'utilisateur du véhicule, et **en ce que** les moyens de pilotage (20) coopèrent avec les moyens (22) d'acquisition, pour d'une part déterminer la température extérieure (Te) au véhicule, et, d'autre part, ouvrir, respectivement fermer, l'actionneur de la branche (7, 45) aérotherme lorsque la température extérieure (Te) est inférieure, respectivement supérieure, à la première température consigne (Tc).

13. Dispositif selon la revendication 10 ou 12, **caractérisé en ce que** la branche (7, 45) comportant les moyens (12) aérotherme est munie d'un actionneur piloté électroniquement, les moyens aérotherme étant aptes à assurer une climatisation de l'habitacle à une seconde température consigne (Tr) déterminée par l'utilisateur du véhicule, et **en ce que** les moyens de pilotage (20) coopèrent avec les moyens (22) d'acquisition, pour d'une part déterminer la température extérieure (Te) au véhicule, et, d'autre part, fermer, respectivement ouvrir, l'actionneur de la branche (7, 45) aérotherme lorsque la température extérieure (Te) est inférieure, respectivement supérieure, à la seconde température consigne (Tr).

**Claims**

1. Method for cooling a motor vehicle engine, consisting in regulating the volume and flow of a coolant fluid in a hydraulic circuit (2) provided with various branches (4, 5, 6, 7, 8, 44, 45) in which are arranged items of thermal equipment (9, 10, 11, 12, 13, 140, 150, 160), comprising a step of determining the temperature of the coolant, and a step of limiting or stopping the circulation of the fluid in at least some of the branches when the temperature of the fluid is below a first predetermined threshold temperature ($T_1$), **characterised in that** it comprises a step of determining the average instantaneous power (Pm) provided by the engine (1), followed by a step of determining the first threshold temperature ($T_1$) as a function of the average instantaneous power (Pm) and of a predetermined model of the operation of the engine (1) defining its cold state, first threshold temperature ($T_1$), as a function of average power (Pm).

**2.** Cooling device of a motor vehicle engine, of the type comprising a hydraulic circuit (2) of coolant fluid, associated with a pump (3) for circulating the same through the engine (1) of the vehicle and various branches (4, 5, 6, 7, 8, 44, 45) of the circuit, in which are arranged items of thermal equipment (9, 10, 11, 12, 13, 140, 150, 160) of the vehicle, at least some of the branches (4, 5, 6, 7, 8, 44) of the circuit (2) being provided with electronically controlled actuators (14, 15, 16, 17, 18, 29) for regulating the circulation of the fluid therein, the device comprising means (22) for acquisition of information relating to the operating conditions of the vehicle, connected to means (19) for controlling of the operation of the actuators (14, 15, 16, 17, 18, 29), in order to regulate the volume and flow of fluid circulating through the hydraulic circuit (2) so as to optimise the operation of the engine, the information acquisition means (22) being capable of determining the temperature of the coolant, the control means (19) ensuring that the circulation of the fluid through at least some of the branches (4, 5, 6, 7, 8, 44) is limited or stopped when the temperature of the fluid is below a first predetermined threshold temperature ($T_1$), **characterised in that** the control means (20) co-operate with the acquisition means (22), in order to calculate, on the one hand, the average instantaneous power (Pm) supplied by the engine (1) then, on the other hand, the first threshold temperature ($T_1$) as a function of the average instantaneous power (Pm) and of a predetermined model of the operation of the engine (1) defining its cold state, first threshold temperature ($T_1$), as a function of average power (Pm).

**3.** Device according to Claim 2 **characterised in that** the control means (19) at least temporarily ensure the circulation of the fluid through at least some of the branches (4, 5, 6, 7, 8, 44) when the temperature of the fluid is above a second predetermined threshold temperature ($T_2$).

**4.** Device according to Claims 2 and 3 **characterised in that**, when the temperature of the fluid is comprised between the first ($T_1$) and second ($T_2$) threshold temperature, the control means (19) at least temporarily ensure the circulation of the fluid through at least some (4, 5, 6, 7, 8, 44) of the branches, the volume and/or the flow of fluid circulating through said branches (4, 5, 6, 7, 8, 44) being a function of the temperature of the liquid.

**5.** Device according to Claim 3 or 4, **characterised in that** the second threshold temperature ($T_2$) is comprised between approximately 60 and 100 degrees.

**6.** Device according to any one of Claims 2 to 5, **characterised in that** the first threshold temperature ($T_1$) is comprised between approximately 20 and 60 degrees and defines the fluid temperature below which the state of the engine (1) is said to be "in a transient state" or "cold".

**7.** Device according to any one of Claims 2 to 6, **characterised in that** information acquisition means (22) are capable of detecting any failure of the actuators (14, 15, 16, 17, 18, 29), so that, when at least one failure of an actuator (14, 15, 16, 17, 18, 29) is detected and whatever the temperature of the fluid, the control means (19) ensure the free circulation of the fluid through at least some of the branches (4, 5, 6, 7, 8, 44).

**8.** Device according to any one of the preceding claims, **characterised in that** the coolant circulation pump (3) is a mechanical pump.

**9.** Device according to any one of the preceding claims, **characterised in that** it comprises a branch (7) provided with an electronically controlled actuator (17) and associated with means (150) forming recirculation for at least part of the exhaust gas from the engine (1) to the inlet, or "Exhaust Gas Recycling (EGR)", the actuator (17) of the cooling branch (7) associated with the exhaust gas recycling means being closed when the temperature of the fluid is below the first threshold temperature ($T_1$).

**10.** Device according to any one of the preceding claims, **characterised in that** it comprises a branch (7, 45) comprising means (12) forming an air heater for the passenger compartment and, if appropriate, additional heating means (160).

**11.** Device according to Claim 10, **characterised in that** it comprises means (12) forming an air heater for the passenger compartment and, if appropriate, additional heating means (160) located in the branch (7) comprising the exhaust gas recycling means (150) from the engine (1).

**12.** Device according to Claim 9, **characterised in that** the branch (7, 45) comprising the air heater means (12) is provided with an electronically controlled actuator, the air heater means being capable of providing heating for the passenger compartment to a first set temperature (Tc) determined by the user of the vehicle, and **in that** the control means (20) co-operate with the acquisition means (22) in order, on the one hand, to determine the temperature (Te) outside the vehicle and, on the other hand, to open or close the actuator of the air heater branch (7, 45) when the outside temperature (Te) is lower or higher, respectively, than the first set temperature (Tc).

**13.** Device according to Claim 10 or 12, **characterised in that** the branch (7, 45) comprising the air heater means (12) is provided with an electronically controlled actuator, the air heater means being capable of providing air-conditioning for the passenger compartment to a second set temperature (Tr) determined by the user of the vehicle, and **in that** the control means (20) co-operate with the acquisition means (22) in order, on the one hand, to determine the temperature (Te) outside the vehicle and, on the other hand, to close or open the actuator of the air heater branch (7, 45) when the outside temperature (Te) is lower or higher, respectively, than the second set temperature (Tr).

**Patentansprüche**

1. Verfahren zum Kühlen eines Kraftfahrzeug-Motors, das darin besteht, das Volumen und den Durchsatz eines wärmeübertragenden Kühlfluids in einem Hydraulikkreislauf (2) mit verschiedenen Zweigen (4, 5, 6, 7, 8, 44, 45) zu regeln, in denen thermische Einrichtungen (9, 10, 11, 12, 13, 140, 150, 160) angeordnet sind, und einen Schritt des Bestimmens der Temperatur der Kühlflüssigkeit sowie einen Schritt des Begrenzens oder Anhaltens der Zirkulation des Fluids zumindest in bestimmten Zweigen aufweist, wenn die Temperatur des Fluids niedriger als ein erster bestimmter Temperatur-Grenzwert ($T_1$) ist, **dadurch gekennzeichnet, dass** es einen Schritt des Bestimmens der momentan vom Motor (1) gelieferten Durchschnittsleistung (Pm) aufweist, auf den ein Schritt des Bestimmens des ersten Temperatur-Grenzwerts ($T_1$) in Abhängigkeit von der momentanen Durchschnittsleistung (Pm) und einer bestimmten Modellierung der Funktionsweise des Motors (1) folgt, die seinen kalten Zustand - erster Temperatur-Grenzwert ($T_1$) - in Abhängigkeit von der Durchschnittsleistung festlegt.

2. Vorrichtung zum Kühlen eines Kraftfahrzeug-Motors mit Hydraulikkreislauf (2) für ein wärmeübertragendes Kühlfluid, der mit einer Pumpe (3) verbunden ist, die das Fluid durch den Motor (1) des Fahrzeugs und verschiedene Zweige (4, 5, 6, 7, 8, 44, 45) des Kreislaufs zirkulieren lässt, in denen thermische Einrichtungen (9, 10, 11, 12, 13, 140, 150, 160) des Fahrzeugs angeordnet sind, wobei zumindest bestimmte Zweige (4, 5, 6, 7, 8, 44) des Kreislaufs (2) mit elektronisch gesteuerten Betätigungsorganen (14, 15, 16, 17, 18, 29) versehen sind, die die Zirkulation des Fluids in den Zweigen regeln, wobei die Vorrichtung Mittel (22) zum Erfassen von Informationen über die Betriebsbedingungen des Fahrzeugs aufweist, die mit Mitteln (19) zum Steuern der Funktionsweise der Betätigungsorgane (14, 15, 16, 17, 18, 29) verbunden sind, um das Volumen und den Durchsatz des im Hydraulikkreis (2) zirkulierenden Fluids so zu regeln, dass die Funktionsweise des Motors optimiert wird, wobei die Informationserfassungs-Mittel (22) die Temperatur der Kühlflüssigkeit bestimmen können, wobei die Steuermittel (19) für die Begrenzung oder das Anhalten der Zirkulation des Fluids zumindest in bestimmten Zweigen (4, 5, 6, 7, 8, 44) sorgen können, wenn die Temperatur des Fluids niedriger ist als ein erster bestimmter Temperatur-Grenzwert ($T_1$), **dadurch gekennzeichnet, dass** die Steuermittel (20) mit den Erfassungsmitteln (22) zusammenwirken, um zum einen die vom Motor (1) gelieferte momentane Durchschnittsleistung (Pm) und zum anderen den ersten Temperatur-Grenzwert ($T_1$) in Abhängigkeit von der momentanen Durchschnittsleistung (Pm) und einer bestimmten Modellierung der Funktionsweise des Motors (1) zu berechnen, die seinen kalten Zustand - erster Temperatur-Grenzwert (T1) - in Abhängigkeit von der Durchschnittsleistung (Pm) festlegt.

3. Vorrichtung nach Anspruch 2, **dadurch gekennzeichnet, dass** die Steuermittel (19) zumindest vorübergehend für die Zirkulation des Fluids zumindest in bestimmten Zweigen (4, 5, 6, 7, 8, 44) sorgen, wenn die Temperatur des Fluids einen zweiten bestimmten Temperatur-Grenzwert ($T_2$) Überschreitet.

4. Vorrichtung nach den Ansprüchen 2 und 3, **dadurch gekennzeichnet, dass** wenn die Temperatur des Fluids zwischen dem ersten Temperatur-Grenzwert ($T_1$) und dem zweiten Temperatur-Grenzwert ($T_2$) liegt, die Steuermittel (19) zumindest vorübergehend für die Zirkulation des Fluids zumindest in bestimmten Zweigen (4, 5, 6, 7, 8, 44) sorgen, wobei das Volumen und/oder der Durchsatz an Fluid, das in den Zweigen (4, 5, 6, 7, 8, 44) zirkuliert, von der Temperatur der Flüssigkeit abhängt.

5. Vorrichtung nach Anspruch 3 oder 4, **dadurch gekennzeichnet, dass** der zweite Temperatur-Grenzwert ($T_2$) ungefähr zwischen 60 und 100 Grad liegt.

6. Vorrichtung nach einem der Ansprüche 2 bis 5, **dadurch gekennzeichnet, dass** der erste Temperatur-Grenzwert ($T_1$) ungefähr zwischen 20 und 60 Grad liegt und die Fluidtemperatur festlegt, unterhalb der der Zustand der Motors (1) als "vorübergehend" oder "kalt" bezeichnet wird.

7. Vorrichtung nach einem der Ansprüche 2 bis 6, **dadurch gekennzeichnet, dass** die Informationserfassungs-Mittel (22) gegebenenfalls ein Versagen der Betätigungsorgane (14, 15, 16, 17, 18, 29) feststellen können, sodass die Steuermittel (19) unabhängig von der Temperatur des Fluids für die freie Zirkulation des Fluids zumindest in bestimmten Zweigen (4, 5, 6, 7, 8, 44) sorgen, wenn mindestens ein Versagen eines Betätigungsorgans (14, 15, 16, 17, 18, 29) festgestellt wird.

**8.** Vorrichtung nach einem der vorhergehenden Ansprüche, **dadurch gekennzeichnet, dass** die Umlaufpumpe (3) für das Kühlfluid eine mechanische Pumpe ist.

**9.** Vorrichtung nach einem der vorhergehenden Ansprüche, **dadurch gekennzeichnet, dass** sie einen Zweig (7) aufweist, der mit einem elektronisch gesteuerten Betätigungsorgan (17) versehen und mit Mitteln (150) verbunden ist, die zumindest einen Teil der Abgase des Motors (1) zum Einlass zurückführen, auch "Exhaust Gaz Recycling (EGR" genannt, wobei das Betätigungsorgan (17) des Kühlzweigs (7) mit den Abgasrückführungs-Mitteln geschlossen ist, wenn die Temperatur des Fluids niedriger ist als der erste Temperatur-Grenzwert ($T_1$).

**10.** Vorrichtung nach einem der vorhergehenden Ansprüche, **dadurch gekennzeichnet, dass** sie einen Zweig (7, 45) mit Mitteln (12), die eine Luftheizung für den Fahrgastraum bilden, und eventuell mit zusätzlichen Heizmitteln (160) aufweist.

**11.** Vorrichtung nach Anspruch 10, **dadurch gekennzeichnet, dass** sie Mittel (12) aufweist, die eine Luftheizung für den Fahrgastraum bilden, und eventuell zusätzliche Heizmittel (160), die im Zweig (7) mit den Mitteln (150) zum Rückführen der Abgase des Motors (1) angeordnet sind.

**12.** Vorrichtung nach Anspruch 9, **dadurch gekennzeichnet, dass** der Zweig (7, 45) mit den Luftheizmitteln (12) mit einem elektronisch gesteuerten Betätigungsorgan versehen ist, wobei die Luftheizmittel für das Erwärmen des Fahrgastraums auf eine erste, vom Benutzer des Fahrzeugs bestimmte Solltemperatur (Tc) sorgen können, und **dadurch**, dass die Steuermittel (20) mit den Erfassungsmitteln (22) zusammenwirken, um zum einen die außerhalb des Fahrzeugs vorliegende Temperatur (Te) zu erfassen und zum anderen das Betätigungsorgan des Luftheizzweigs (7, 45) zu öffnen beziehungsweise zu schließen, wenn die Außentemperatur (Te) niedriger beziehungsweise höher ist als die erste Solltemperatur (Tc).

**13.** Vorrichtung nach Anspruch 10 oder 12, **dadurch gekennzeichnet, dass** der Zweig (7, 45) mit den Luftheizmitteln (12) mit einem elektronisch gesteuerten Betätigungsorgan versehen ist, wobei die Luftheizmittel für eine Klimatisierung des Fahrgastraums auf eine zweite, vom Benutzer des Fahrzeugs bestimmte Solltemperatur (Tr) sorgen können, und **dadurch**, dass die Steuermittel (20) mit den Erfassungsmitteln (22) zusammenwirken, um zum einen die außerhalb des Fahrzeugs vorliegende Temperatur (Te) zu ermitteln und zum anderen das Betätigungsorgan des Luftheizzweigs (7, 45) zu schließen beziehungsweise zu öffnen, wenn die Außentemperatur niedriger beziehungsweise höher ist als die zweite Solltemperatur (Tr).

**FIG.1**

## FIG.2

$$T = T_1(P_m)$$

$$T_1 = f(P_m)$$

## FIG.3

## FIG.4

15

$T_1 = f(P_m)$

$T_2$

$T_0$

$P$

$P$

$P$

$T_0$

## FIG.5

$P$

$T_0$

$T_1$

$T_2$

## FIG.6

H

$T_1$

$T_2$

T

O

Of

E

E

## FIG.7

16

$T > T_2$

%O

O

F

T

14

%O

O

F

T

15

R

R

## FIG.8

$d_1(\frac{dT}{dt})$   $d_2(\frac{dT}{dt})$

V

$V_{max}$

$V_{min}$

T

## FIG.9